# EUROPÄISCHE PATENTSCHRIFT

(11) **EP 0 594 699 B1**
(45) Veröffentlichungstag und Bekanntmachung des Hinweises auf die Patenterteilung: **06.12.1995**
(21) Anmeldenummer: 92915050.6
(22) Anmeldetag: 10.07.1992
(51) Int. Cl.: B23K 26/00, B23Q 15/00, G05B 19/416

(54) **CNC-GESTEUERTE MEHRACHSIGE WERKZEUGTRÄGER**
MULTIAXIS CNC TOOL HOLDER
PORTE-OUTIL A COMMANDE NUMERIQUE PAR ORDINATEUR ET TRAVAILLANT DANS PLUSIEURS AXES

(30) Priorität: 13.07.1991 DE 4123323
(43) Veröffentlichungstag der Anmeldung: 04.05.1994
(73) Patentinhaber: EHLERDING, Andreas, D-31718 Pollhagen (DE)
(72) Erfinder: EHLERDING, Andreas, D-31718 Pollhagen (DE)
(74) Vertreter: König, Norbert, Dipl.-Phys. Dr.
(86) Internationale Anmeldenummer: EP9201567
(87) Internationale Veröffentlichungsnummer: WO9301021

(56) Entgegenhaltungen:
- EP-A- 0 010 578
- EP-A- 0 086 950
- EP-A- 0 483 756
- US-A- 4 338 672
- US-A- 4 528 632
- US-A- 4 594 671
- US-A- 4 734 866
- Patent Abstracts of Japan, Band 13, Nr 309, P898, Zusammenfassung von JP 01-81011, publ 1989-03-27 (FANUC LTD)

## Beschreibung

Die Erfindung betrifft einen Werkzeugträger gemäß Oberbegriff des Anspruchs 1.

Bei der Konzeption von Werkzeugmaschinen ergeben sich häufig eine Reihe von widersprüchlichen Forderungen, wie
1. Geringes Gewicht,
2. Hohe Stabilität,
3. Großes Bearbeitungsfeld,
4. Hohe Beschleunigungswerte für die Achsbewegungen, um
   a) konstante Bearbeitungsgeschwindigkeiten, auch an kleinen Radien oder Ecken zu erhalten und
   b) auch bei sehr komplizierten Bearbeitungskonturen insgesamt möglichst hohe Bearbeitungsgeschwindigkeiten zu erhalten.

Bei Laserschneidmaschinen zum Bearbeiten von plattenförmigen Materialien gibt es nahezu jede denkbare Variante von Achsantrieben. Die wichtigsten sind:
1. Ruhender Tisch, Portal in X-Richtung bewegt mit in Y-Richtung bewegtem Werkzeugträger, auf dem die Z-Achse angebracht ist;
2. Kreuztisch für die Achsen X und Y, auf dem das Material unter dem Laserstrahl bewegt wird und eine Z-Achse, die über dem Werkstück für die korrekte Höhe des Werkzeuges sorgt.
3. In X-Richtung bewegter Tisch unter einem Portal oder stabilen Arm hindurch, auf dem die Y-Achse mit integrierter Z-Achse verfährt.

Allen Bauarten ist ein Problem gemeinsam:
Obwohl das eigentliche Werkzeug lediglich ein Lichtstrahl ist, der mit verhältnismäßig massearmen optischen Einrichtungen (Spiegeln und Linsen) dem Material zugeführt wird und keinerlei unmittelbare Bearbeitungskräfte auftreten, die von der Maschinenkonstruktion aufgenommen werden müssen, sind die bekannten Konstruktionen verhältnismäßig massereich. So wiegen Maschinen für eine Bearbeitungsfläche von 3 x 2 m normalerweise zwischen 5 und 10 Tonnen. Die schwersten zu bewegenden Teile wiegen bei der Bauweise mit Kreuztisch bei dieser Größe bis zu 5 Tonnen und bei der Bauweise mit fahrendem Portal ("fliegende Optik") zwischen 500 und 1000 kg.

Am Beispiel der Bauweise mit bewegtem Portal erklären sich diese Massen im wesentlichen aus zwei Hauptforderungen:
1. Die große Spannweite des Portals und
2. die notwendige Stabilität, um den Werkzeugträger incl. Z-Achse und notwendiger optischer Einrichtungen schwingungsarm, präzise und mit möglichst hoher Beschleunigung führen zu können.

Die Antriebe, insbesondere für die Bewegung des Portals in X-Richtung, fallen dementsprechend sehr kräftig aus. Motoren, Getriebe und Wellen müssen hohen Belastungen gewachsen sein. Wenn dann zugleich auch Präzision verlangt ist, treten wiederum neue Probleme und erhebliche Kosten auf, da spielarme Getriebe und Motoren, die auch auf kleinste Signale exakt reagieren, in dieser Dimensionierung sehr aufwendig und damit auch teuer sind.

Selbst die hieraus resultierenden kostspieligen und schweren Maschinen sind jedoch mit ihrer maximalen Beschleunigung von ca. 0,5 G in vielen Anwendungsbereichen für eine wirtschaftliche Ausnutzung der verfügbaren Laserleistung noch immer erheblich zu träge, da z. B. beim massenhaften Ausschneiden von Kleinteilen, künstlerischen Formen in der Werbung und filigranen Schriftzügen in schneller Folge sehr enge Radien durchfahren werden müssen, wobei die möglichen Schneidgeschwindigkeiten oft bei ca. 20 m/min. liegen. Hierbei können mit einer maximalen Beschleunigung von 0,5 G lediglich Radien bis zu etwa 15 mm Radius mit voller Geschwindigkeit durchfahren werden.

Dies ist jedoch eher ein theoretischer Wert, da die daraus folgende Belastung an allen Teilen des Antriebs zu einem erheblichen Verschleiß und somit zu hohen Stillstandzeiten und Folgekosten führen würde, womit ein wirtschaftlicher Betrieb in der Praxis oft nicht möglich ist, zumal selbst diese Beschleunigung für eine hinreichend konstante und zugleich möglichst hohe Geschwindigkeit in vielen Fällen (Ecken und kleine Radien von wenigen Millimetern) ohnehin nicht ausreicht.

Ähnliche Bedingungen gelten auch für andere Bearbeitungsarten, z. B. für das Hochgeschwindigkeitsfräsen von Leichtmetallen, das Gravieren oder für Zeichenmaschinen (Plotter).

Die Aufgabe der vorliegenden Erfindung besteht darin, einen Werkzeugträger der eingangs genannten Art so auszubilden, daß höhere konstante Bearbeitungsgeschwindigkeiten und/oder kürzere Beschleunigungswege erreichbar sind, insbesondere bei Bearbeitungskonturen mit vielen kleinen Radien und Ecken.

Diese Aufgabe wird durch die Ausbildung gemäß Anspruch 1 gelöst.

Vorteilhafte und zweckmäßige Weiterbildungen sind in den Unteransprüchen angegeben.

Die Erfindung soll nachfolgend anhand eines in der beigefügten Zeichnung dargestellten Beispiels näher erläutert werden.

Es zeigt:

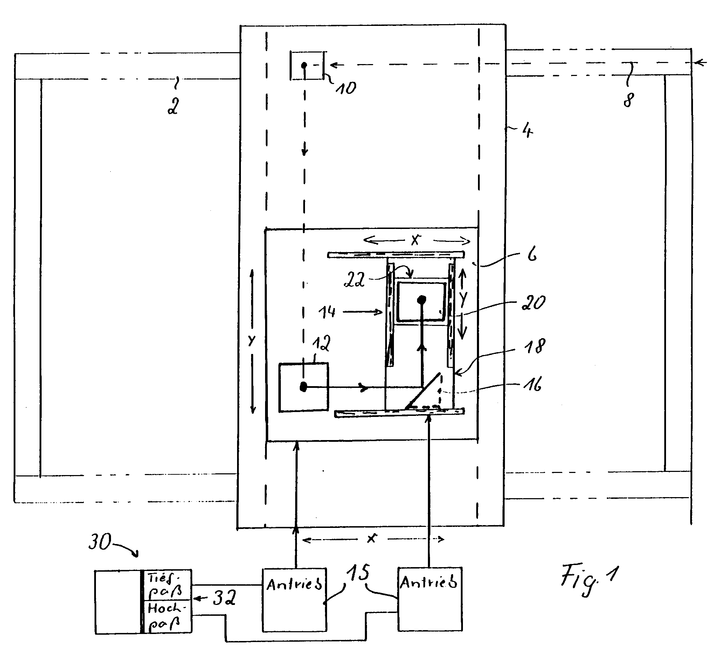

- Fig. 1: eine schematische Darstellung eines auf einem Portal angeordneten Werkzeugträgers einer Werkzeugmaschine zur Bearbeitung von Werkstücken mittels Laserstrahl und

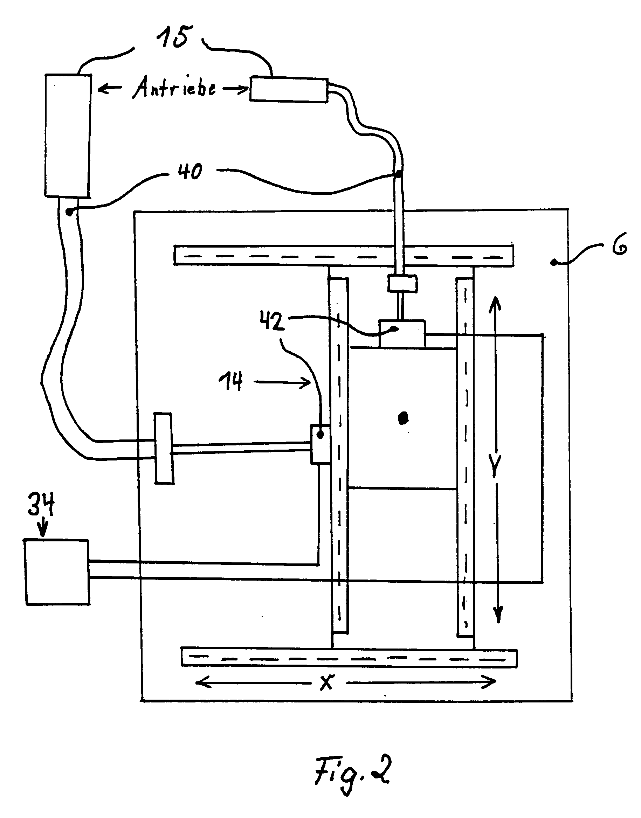

- Fig. 2: schematisch eine spezielle Ausführungsform eines Werkzeugträgers.

Die Zeichnung zeigt einen Teil einer Werkzeugmaschine für Laserstrahlbearbeitung mit einer Führungsschiene 2, auf der ein Portal 4 in X-Richtung verfahrbar ist. Auf dem Portal ist ein eine Achse in Z-Richtung aufweisender Werkzeugträger 6 in Y-Richtung verfahrbar.

Auf dem Werkzeugträger 6 ist eine das "Werkzeug" tragende Einrichtung 14 angeordnet, die in X- und Y-Richtung verfahrbar ist. Die Einrichtung 14 ermöglicht eine zusätzliche, die Bewegung des Portals und des Werkzeugträgers überlagernde Bewegung in X- und Y-Richtung.

Eine Einrichtung 30 dient zur Koordinierung der sich überlagernden Bewegungsanteile derart, daß die resultierende maximale Beschleunigung des Gesamtsystems von der maximalen Beschleunigung der Einrichtung 14 abhängig ist.

Die Einrichtung 30 kann Teil einer CNC-Steuerung sein, die über Software oder entsprechende Hardware die Steuerungssignale für die Achsen des Werkzeugträgers 6 und die entsprechenden Achsen der Einrichtung 14 erzeugt, derart, daß die Achsen der Einrichtung 14 die Bewegungsanteile mit einer höheren Beschleunigung erhalten als die maximale Beschleunigung der Achsen des Werkzeugträgers.

Die Einrichtung 30 kann auch von einer CNC-Steuerung je Achse mit einem Signal gespeist werden, das der notwendigen Gesamtbewegung entspricht. Die Einrichtung 30 spaltet das Signal in den Bewegungsanteilen von Werkzeugträger 6 und Einrichtung 14 zugeordnete Signalteile auf zur Steuerung der Achsanteile von Werkzeugträger und Einrichtung 14. Es ist dabei eine Einrichtung zur Gewinnung von orts- und/oder geschwindigkeitsabhängigen Signalen (nicht dargestellt) vorgesehen, die der Einrichtung 30 zugeführt werden und in dieser Einrichtung 30 achsweise addiert werden. Die resultierenden Signale werden der CNC-Steuerung als Rückkopplungssignale zugeführt. Zur Aufspaltung des Signales in die Steuerungssignale für die jeweiligen Achsanteile von Werkzeugträger und Einrichtung 14 sind elektronische Filter 32 vorgesehen, wobei die Steuersignalanteile für den Werkzeugträger durch einen Tiefpaß und die Steuersignalanteile für die Einrichtung 14 durch einen Hochpaß erzeugt werden. Für die Abstimmung von Tief- und Hochpaß ist vorzugsweise die gleiche Grenzfrequenz vorgesehen.

Ein Laserstrahl 8 wird von einem auf dem Portal angeordneten ersten Spiegel 10 auf einen auf dem Werkzeugträger 6 ortsfest angeordneten Umlenkspiegel 12 umgelenkt.

Die Einrichtung 14 weist einen ersten in X-Richtung und relativ zum ortsfesten Umlenkspiegel 12 bewegbaren Umlenkspiegel 16 auf. Hierzu ist der Umlenkspiegel 16 auf einem in X-Richtung verfahrbaren ersten Spiegelträger 18 angeordnet.

Auf dem Spiegelträger 18 ist ein zweiter in Y-Richtung und relativ zum ersten Umlenkspiegel 16 bewegbarer zweiter Umlenkspiegel 20 angeordnet, der auf einem zweiten, auf dem ersten Spiegelträger 18 in Y-Richtung verfahrenbaren zweiten Spiegel 22 angeordnet ist.

Durch die beschriebene Ausbildung des Werkzeugträgers 6 setzt sich die Bewegung sowohl in X- als auch in Y-Richtung aus jeweils zwei sich überlagernden Bewegungen zusammen; die Bewegung der Einrichtung 14 überlagert die Bewegungen des Portals und des Werkzeugträgers.

Die Einrichtung 14 weist im Vergleich zu der Anordnung Portal/Werkzeugträger eine wesentlich geringere bewegte Masse auf, so daß es möglich ist, mit relativ geringem baulichem Aufwand für die Einrichtung 14 wesentlich höhere Beschleunigungen zu realisieren als für die Anordnung Portal/Werkzeugträger. Diese Ausbildung bietet somit den Vorteil, mit Hilfe der Einrichtung 14 wesentlich größere Bearbeitungsgeschwindigkeiten zu realisieren. Die Bewegung des Portals und Werkzeugträgers kann dabei der Bewegung der Einrichtung in bestimmten Grenzen nacheilen, ohne daß für die Bearbeitungsgeschwindigkeit Probleme auftreten.

Die maximal notwendigen Verfahrwege für die Einrichtung 14, um die nacheilende Anordnung Portal/Werkzeugträger auf die Endgeschwindigkeit zu beschleunigen, ohne daß die Gesamtbeschleunigung unter die Werte der Einrichtung 14 in X- und Y-Richtung fällt, betragen annäherungsweise 2 x (vₑ²/2 x b), worin vₑ die zu erreichende Endgeschwindigkeit und b die Beschleunigung von Portal und Werkzeugträger in X- und Y-Richtung sind. Der vorangestellte Faktor 2 berücksichtigt, daß die notwendigen Ausgleichsbewegungen in beiden Bewegungsrichtungen (positiv und negativ) der X- und Y-Achsen möglich sein müssen.

So ergibt sich für eine Werkzeugmaschine, deren höchste Bearbeitungsgeschwindigkeit 20 m/min. betragen soll und deren Anordnung Portal/Werkzeugträger eine Beschleunigung von 0,1 g erreicht, ein maximal notwendiger Verfahrweg der Einrichtung 14 in X- und Y-Richtung von jeweils 11 cm. Also muß sich die Einrichtung 14 auf dem Werkzeugträger aus einer neutralen Nullposition heraus jeweils um 11 cm/2, also 5,5 cm, bewegen können. Die mögliche Beschleunigung der Einrichtung 14 ist zugleich die mögliche Beschleunigung der Gesamtwerkzeugmaschine.

So lassen sich, da der Antrieb 15 für die Einrichtung 14 nach völlig anderen Kriterien als für die Anordnung Portal/Werkzeugträger ausgewählt werden kann, sehr hohe Beschleunigungen erreichen. Ein Wert von 5 G und mehr ist realisierbar. Damit ist bei der erwähnten Geschwindigkeit von 20 m/min. ein Kurvenradius von unter 1,5 mm ohne Verzögerung zu bewältigen.

Für andere Varianten, z. B. Kreuztisch, eignet sich die beschriebene Ausbildung ebenfalls, da durch die Anordnung einer kleinen und stabilen, mit Umlenkspiegel ausgerüsteten Einrichtung 14 über dem Werkstück die Laserstrahlqualität kaum vermindert wird, aber ein sehr weiches Anfahren des Tisches möglich wird. So sind auch bei dieser Bauart hohe effektive Beschleunigungen möglich.

Da bei vielen Aufgaben die Verfahrwege der Einrichtung 14 relativ lang (mehrere Zentimeter) sind, entsteht auch bei Verwendung moderner Antriebe (z. B. Linearmotor) ein ungünstiges Verhältnis zwischen den bewegten Massen von Werkzeug und Antrieb.

Dieses Problem kann bei geringer bewegter Masse des Werkzeuges durch Auslagerung der Antriebseinheit (Motor) 15 aus der Einrichtung 14, entweder auf den Werkzeugträger (6) oder neben die Maschine gelöst werden. Die in der Antriebseinheit 15 erzeugte lineare oder rotorische Bewegung kann dann über eine flexible Welle oder einen Bowdenzug 40 auf die Einrichtung 14 übertragen werden und dort zum Antrieb einer Spindel oder einer linearen Führung genutzt werden.

Durch die mechanische Elastizität der Einrichtung 40 wird in vielen Fällen eine Kompensation des Bewegungsfehlers mit hoher Geschwindigkeit notwendig sein. Hierzu bietet sich ein kurzhubiges Antriebselement 42 (z. B. Piezokristall oder elektromagnetisches Element) an, das in den Kraftübertragungsweg unmittelbar vor den Achsen der Einrichtung 14 eingefügt wird. Die Steuerung der Antriebselemente 42 erfolgt über eine Einrichtung 34, welche die notwendigen Korrektursignale erzeugt, z. B. durch Rückkopplung über das Meßsystem der Achsen der Einrichtung 14.

Bei automatischen Zeichengeräten (sog. Plotter) ergeben sich ähnliche Probleme wie bei Werkzeugmaschinen, so daß auch hier die Anwendung des beschriebenen Werkzeugträgers sinnvoll ist. Dies gilt insbesondere für Plotter, die in einer Richtung das Zeichenmedium (z. B. Papier) bewegen. Wenn ein Werkzeugträger 6 mit einer Einrichtung 14, die eine Bewegungsachse parallel zur Papierbewegung enthält, und die als Stifthalter ausgebildet ist, statt des bisherigen Stifthalters verwendet wird, so ist dadurch bei gleicher Zeichengeschwindigkeit eine wesentlich geringere Krafteinwirkung auf das Zeichenmedium oder bei gleicher Krafteinwirkung eine höhere Zeichengeschwindigkeit möglich.

## Patentansprüche

1. Werkzeugträger, insbesondere für Bearbeitungs- und Werkzeugmaschinen sowie automatische Zeichengeräte, welcher in bezug zur zwei- oder dreidimensionalen Bearbeitungs- oder Zeichenfläche 2- oder 3-dimensional bewegbar ist, **dadurch gekennzeichnet**, daß auf dem Werkzeugträger (6) eine 1-, 2- oder 3-dimensional verfahrbare, den Werkzeugträger bewegungsmäßig überlagernde, mit höherer Beschleunigung als der Werkzeugträger (6) antreibbare (15) Einrichtung (14) zur Aufnahme des Werkzeuges angeordnet ist, und daß eine Einrichtung (30) zur Koordinierung der sich überlagernden Bewegungsanteile vorgesehen ist, derart; daß die maximale Beschleunigung des Gesamtsystems in Richtung der Bewegungsachsen der Einrichtung (14) der maximal möglichen Beschleunigung der Einrichtung (14) entspricht.

2. Werkzeugträger nach Anspruch 1, **dadurch gekennzeichnet**, daß die Einrichtung (30) Teil einer CNC-Steuerung ist, die über Software oder entsprechende Hardware die Steuerungssignale für die Achsen des Werkzeugträgers (6) und die entsprechenden Achsen der Einrichtung (14) erzeugt, derart, daß die Achsen der Einrichtung (14) die Bewegungsanteile mit einer höheren Beschleunigung als die maximale Beschleunigung der Achsen des Werkzeugträgers erhalten.

3. Werkzeugträger nach Anspruch 1, **dadurch gekennzeichnet**, daß die Einrichtung (30) von einer CNC-Steuerung je Achse mit einem Signal gespeist wird, das der notwendigen Gesamtbewegung der Achsen entspricht und daß die Einrichtung (30) das Signal in den Bewegungsanteilen von Werkzeugträger (6) und Einrichtung (14) zugeordnete Signalteile aufspaltet zur Steuerung der Achsanteile des Werkzeugträgers und der Einrichtung (14).

4. Werkzeugträger nach Anspruch 3, **dadurch gekennzeichnet**, daß eine Einrichtung zur Gewinnung von orts- und/oder geschwindigkeitsabhängigen Signalen vorgesehen ist, die der Einrichtung (30) zugeführt und in dieser Einrichtung (30) achsweise addiert werden, und daß die resultierenden Signale der CNC-Steuerung als Rückkopplungssignale zugeführt werden.

5. Werkzeugträger nach Anspruch 2 oder 3, **dadurch gekennzeichnet**, daß zur Aufspaltung des Signals in die Steuerungssignale für die jeweiligen Achsanteile von Werkzeugträger und Einrichtung (14) elektronische Filter (32) vorgesehen sind, wobei die Steuersignalanteile für den Werkzeugträger durch einen Tiefpaß und die Steuersignalanteile für die Einrichtung (14) durch einen Hochpaß erzeugt werden.

6. Werkzeugträger nach Anspruch 5, **dadurch gekennzeichnet**, daß für die Abstimmung von Tief- und Hochpaß die gleiche Grenzfrequenz vorgesehen ist.

7. Werkzeugträger nach einem der vorhergehenden Ansprüche, **dadurch gekennzeichnet**, daß für Laserstrahlbearbeitung auf dem Werkzeugträger (6) ein relativ zum Werkzeugträger ortsfester Umlenkspiegel (12) angeordnet ist und die Einrichtung (14) wenigstens einen relativ zum ortsfesten Umlenkspiegel (12) bewegbaren Umlenkspiegel (16, 20) aufweist.

8. Werkzeugträger nach Anspruch 7, **dadurch gekennzeichnet**, daß der Werkzeugträger (6) in wenigstens einer Achse auf einem in wenigstens einer Achse bewegbaren Portal (4) verfahrbar ist, und daß die Einrichtung (14) einen ersten in einer Achse und relativ zum ortsfesten Umlenkspiegel (12) gesteuert bewegbaren Umlenkspiegel (16) und einen zweiten in einer anderen Achse und relativ zum ersten Umlenkspiegel (16) gesteuert bewegbaren Umlenkspiegel (20) aufweist.

9. Werkzeugträger nach Anspruch 8, **dadurch gekennzeichnet**, daß der erste und der zweite Umlenkspiegel (16, 20) auf einem in X-Achse und relativ zum ortsfesten Umlenkspiegel (12) bewegbaren ersten, angetriebenen Spiegelträger (18) und der zweite Umlenkspiegel (20) auf einem zweiten, auf dem ersten Spiegelträger (18) in Y-Achse und relativ zum ersten Umlenkspiegel (16) bewegbaren, angetriebenen Spiegelträger (22) angeordnet sind.

10. Werkzeugträger nach einem der vorhergehenden Ansprüche, **dadurch gekennzeichnet**, daß der Antrieb (15) für die Achsen der Einrichtung (14) nicht mit dem Werkzeugträger (6) bewegt wird, sondern die Bewegungskraft über eine flexible Einrichtung (40) eingeleitet wird.

11. Werkzeugträger nach Anspruch 10, **dadurch gekennzeichnet**, daß die Einrichtung (40) aus Bowdenzügen besteht.

12. Werkzeugträger nach Anspruch 10 oder 11, **dadurch gekennzeichnet**, daß auf der Einrichtung (14) zwischen den Krafteinleitungen der Einrichtung (40) und den bewegbaren Achsen ein kurzhubiges Antriebselement (42) vorhanden ist, um Ungenauigkeiten der Einrichtung (40) zu kompensieren.

13. Werkzeugträger nach einem der Ansprüche 1 bis 12, **dadurch gekennzeichet**, daß das Werkzeug der Zeichenstift eines automatischen Zeichengerätes ist, welches in einer Achse den Werkzeugträger (6) und in der anderen Achse das Zeichenmedium z. B. Papier bewegt, und die Einrichtung (14) mindestens eine Bewegungsachse in der Bewegungsrichtung des Zeichenmediums enthält.

## Claims

1. A tool-carrier, especially for processing-machines and machine tools as well as automatic drawing instruments, which may be moved 2- or 3-dimensionally with reference to the two- or three-dimensional processing-or drawing-area, **characterized in that**
on the tool-carrier (6) a device (14) for receiving the tool is arranged, which is able to travel in 1, 2 or 3 dimensions, being motionally superimposed upon the tool-carrier and drivable (15) with higher acceleration than the tool-carrier (6), and that a device (30) is provided for coordination of the superimposed portions of the motion in such a way that the maximum acceleration of the whole system in the direction of the axes of motion of the device (14) corresponds with the maximum possible acceleration of the device (14).

2. A tool-carrier as in Claim 1, **characterized in that**
the device (30) is part of a CNC control which generates via software or corresponding hardware the control signals for the axes of the tool-carrier (6) and the corresonding axes of the device (14), in such a way that the axes of the device (14) obtain the portions of motion with a higher acceleration than the maximum acceleration of the axes of the tool-carrier.

3. A tool-carrier as in Claim 1, **characterized in that**
from a CNC control the device (30) is fed per axis with one signal which corresponds with the total necessary motion of the axes and that the device (30) splits up the signal into part-signals associated with the portions of motion of the tool-carrier (6) and device (14), for the control of the portions of the axes of the tool carrier and the device (14).

4. A tool-carrier as in Claim 3, **characterized in that**
a device is provided for the production of position- and/or velocity-dependent signals which are fed to the equipment (30) and added axiswise in this equipment (30), and that the resultant signals are fed to the CNC control as feedback signals.

5. A tool-carrier as in Claim 2 or 3, **characterized in that**
for splitting up the signal into the control signals for the respective portions of the axes of the tool-carrier and device (14) electronic filters (32) are provided, the portions of control signal for the tool-carrier being generated through a lowpass filter and the portions of control signal for the device (14) through a highpass filter.

6. A tool-carrier as in Claim 5, **characterized in that**
for the tuning of lowpass and highpass the same limiting frequency is foreseen.

7. A tool-carrier as in one of the preceding Claims**, characterized in that** for laser beam processing there is arranged on the tool-carrier (6) a deflector-mirror (12) which is fixed relative to the tool-carrier, and the device (14) exhibits at least one deflector-mirror (16, 20) which is movable relatively to the fixed deflector-mirror (12).

8. A tool-carrier as in Claim 7, **characterized in that**
the tool-carrier (6) is able to travel in at least one axis along a portal (4) movable in at least one axis and that the device (14) exhibits a first deflector-mirror (16) capable of controlled motion relatively to the fixed deflector-mirror (12) and a second deflector-mirror (20) capable of controlled motion relatively to the first deflector-mirror (16).

9. A tool-carrier as in Claim 8, **characterized in that**
the first and second deflector-mirrors (16, 20) are arranged on a first driven mirror-carrier (18) movable in the X-axis and relatively to the fixed deflector-mirror (12), and the second deflector-mirror (20) is arranged on a second driven mirror-carrier (22) movable on the first mirror-carrier (18) in the Y-axis and relatively to the first deflector-mirror (16).

10. A tool-carrier as in one of the preceding Claims, **characterized** in that the drive (15) for the axes of the device (14) is not moved by the tool-carrier (6) but the motive power is introduced via a flexible device (40).

11. A tool-carrier as in Claim 10**, characterized in that**
the device (40) consists of Bowden wires.

12. A tool-carrier as in Claim 10 or 11, **characterized in that**
there is on the device (14) between the power introductions from the device (40) and the movable axes a short-stroke driver element (42) for compensating inaccuracies in the device (40).

13. A tool-carrier as in one of the Claims 1 to 12, **characterized in that** the tool is the drawing pencil of an automatic drawing instrument which in one axis moves the tool-carrier (6) and in the other axis the drawing medium, e.g., paper, and the device (14) contains at least one axis of motion in the direction of motion of the drawing medium.

## Revendications

1. Porte-outil, en particulier pour des machines d'usinage et des machines-outils ainsi que pour des appareils à dessiner automatiques, qui est mobile bi- ou tri-dimensionnellement par rapport à une surface d'usinage ou de dessin bi- ou tri-dimensionnelle,
caractérisé en ce qu'un dispositif (14) de réception de l'outil déplaçable mono-, bi- ou tri-dimensionnellement est disposé sur le porte-outil (6), superposé en déplacement au porte-outil, pouvant être actionné (15) à une accélération plus élevée que le porte-outil (6) et qu'un dispositif (30) est prévu pour la coordination des composantes de déplacement se superposant de telle sorte que l'accélération maximale de l'ensemble du système dans la direction des axes de déplacement du dispositif (14) correspond à l'accélération maximale possible du dispositif (14).

2. Porte-outil selon la revendication 1,
caractérisé en ce que le dispositif (30) est une partie d'une commande numérique par calculateur qui émet, par l'intermédiaire d'un logiciel ou d'un matériel correspondant, les signaux de commande pour les axes du porte-outil (6) et les axes correspondants du dispositif (14), de telle sorte que les axes du dispositif (14) reçoivent les composantes de déplacement avec une accélération plus élevée que l'accélération maximale des axes du porte-outil.

3. Porte-outil selon la revendication 1,
caractérisé en ce que le dispositif (30) est alimenté par un signal selon chaque axe par une commande numérique par calculateur, qui correspond au déplacement total nécessaire des axes et que le dispositif (30) divise le signal dans les composantes de signal adjointes aux composantes de déplacement du porte-outil (6) et du dispositif (14) pour la commande des composantes d'axe du porte-outil et du dispositif (14).

4. Porte-outil selon la revendication 3,
caractérisé en ce qu'est prévu un dispositif pour la production de signaux dépendant du lieu et/ou de la vitesse qui sont adressés au dispositif (30) et sont additionnés par axe dans ce dispositif (30) et que les signaux résultants sont adressés à la commande numérique par calculateur en tant que signaux de réaction.

5. Porte- outil selon la revendication 2 ou 3,
caractérisé en ce que, pour la division du signal dans les signaux de commande pour les composantes d'axe respectives du porte-outil et du dispositif (14), sont prévus des filtres électroniques (32), les composantes de signal de commande pour le porte-outil étant émises par un filtre passe-bas et les composantes de signal de commande pour le dispositif (14) par un filtre passe-haut.

6. Porte-outil selon la revendication 5,
caractérisé en ce que la même fréquence de coupure est prévue pour l'accord des filtres passe-bas et passe-haut.

7. Porte-outil selon l'une des revendications précédentes, caractérisé en ce que, pour l'usinage au faisceau laser, un miroir de déviation (12) fixe par rapport au porte-outil est disposé sur le porte-outil (6) et le dispositif (14) présente au moins un miroir de déviation (16,20) mobile par rapport au miroir de déviation (12) fixe.

8. Porte-outil selon la revendication 7,
caractérisé en ce que le porte-outil (6) est déplaçable selon au moins un axe sur un portique (4) déplaçable selon au moins un axe et que le dispositif (14) présente un premier miroir de déviation (16) commandé déplaçable selon un axe et par rapport au miroir de déviation (12) fixe et un second miroir de déviation (20) commandé déplaçable selon un autre axe et par rapport au premier miroir de déviation (16).

9. Porte-outil selon la revendication 8,
caractérisé en ce que le premier et le second miroirs de déviation (16,20) sont disposés sur un premier porte-miroir (18) commandé déplaçable selon l'axe des X et par rapport au miroir de déviation (12) fixe et le second miroir de déviation (20) est disposé sur un second porte-miroir (22) commandé déplaçable sur le premier porte-miroir (18) selon l'axe des Y et par rapport au premier miroir de déviation (16).

10. Porte-outil selon l'une des revendications précédentes,
caractérisé en ce que la commande (15) pour les axes du dispositif (14) n'est pas déplacée avec le porte-outil (6) mais la force de déplacement est introduite par un dispositif flexible (40).

11. Porte-outil selon la revendication 10,
caractérisé en ce que le dispositif (40) est constitué par des câbles Bowden.

12. Porte-outil selon la revendication 10 ou 11,
caractérisé en ce qu'un élément de commande (42) à course courte est disposé sur le dispositif (14) entre les entrées de force du dispositif (40) et les axes déplaçables, pour compenser des imprécisions du dispositif (40).

13. Porte-outil selon l'une des revendications 1 à 12,
caractérisé en ce que l'outil est le stylo d'un appareil à dessiner automatique qui déplace le porte-outil (6) selon un axe et le support de dessin, par exemple du papier, selon l'autre axe et le dispositif (14) contient au moins un axe de déplacement dans la direction de déplacement du support de dessin.
